# FASCICULE DE BREVET EUROPEEN

(11) **EP 0 822 495 B1**
(45) Date de publication et mention de la délivrance du brevet: **05.06.2002**
(21) Numéro de dépôt: 97401654.5
(22) Date de dépôt: 10.07.1997
(51) Int. Cl.: G06F 9/46

(54) **Distribution de tickets dans un système informatique multinodal**
Auftragsverteilung in einem Mehrfachknoten-Rechnersystem
Ticket distribution in a multinode computer system

(30) Priorité: 01.08.1996 FR 9609750
(43) Date de publication de la demande: 04.02.1998
(73) Titulaire: BULL S.A., 78434 Louveciennes Cedex (FR)
(72) Inventeur: Boudou, Alain, 78930 Vert (FR); Billard, Christian, 75015 Paris (FR); Daurès, Daniel, 92290 Châtenay-Malabry (FR)
(74) Mandataire: Denis, Hervé

(56) Documents cités:
- EP-A- 0 300 516
- EP-A- 0 394 172
- EP-A- 0 661 634

## Description

L'invention a pour objet un procédé de distribution de tickets dans un système informatique multinodal. Un système informatique multinodal est fait de systèmes informatiques distants appelés noeuds, interconnectés entre eux par des liaisons de transmission électrique ou optique.

L'invention est particulièrement adaptée aux systèmes informatiques multinodaux, dont les noeuds exécutent chacun leur propre système d'exploitation et/ou possèdent chacun plusieurs processeurs constitutifs des systèmes multinodaux multiprocesseurs et/ou les liaisons sont dédiées à la communication entre ces noeuds. Les liaisons peuvent véhiculer les messages soit sous forme de trains de bits en série (liaisons sérielles) soit sous la forme de tranches successives de bits disposés en parallèle (liaisons parallèles).

Elle a aussi pour objets corollaires un système informatique multinodal mettant en oeuvre le procédé, ainsi qu'un noeud informatique et un circuit intégré pour la mise en oeuvre du procédé ou du système informatique.

### L'art antérieur.

Pour les besoins de la programmation d'applications multitâches, il peut être nécessaire d'attribuer dynamiquement un identificateur à une tâche, ou une étiquette temporelle à un événement.

On comprend que pour distinguer une tâche parmi les autres, l'identificateur de la tâche doit être unique dans le système. De même, afin de distinguer la place d'un événement dans la succession temporelle des événements, il faut que les étiquettes soient ordonnées.

Les identificateurs et les étiquettes peuvent être obtenus d'un mécanisme fourni par le système. Ce mécanisme a pour fonction de délivrer, en réponse à une demande d'un identificateur ou d'une étiquette, un nombre unique dans l'espace et durant un intervalle de temps suffisant pour éviter toute erreur. Ce nombre correspond à un numéro et est appelé un ticket, et le mécanisme offre un service de distribution de tickets. Un ticket est couramment distribué selon un ordre déterminé, augmenté ou diminué de façon monotone selon l'ordre temporel des demandes des tickets. La distribution des tickets est faite ordinairement par un composant logiciel.

Ce composant logiciel gère de façon centralisée la distribution des tickets. La centralisation nécessite une communication entre le logiciel de fonctionnement qui demande un ticket et le composant logiciel de distribution de ticket. Cela implique donc des mécanismes logiciels et matériels de communication internodale faisant intervenir l'exécution de protocoles et le transfert physique de données. En pratique, le passage par un logiciel de gestion des communications internodales complique le logiciel de fonctionnement du système et ralentit la distribution des tickets.

En outre, une demande croissante est faite actuellement pour avoir un système informatique multinodal de haute disponibilité. Cette qualité signifie que le système doit conserver ses fonctionnalités malgré l'apparition d'une panne matérielle ou logicielle, voire la perte d'une partie du système, la perte d'un noeud par exemple. Il faut donc dans ce cas que la distribution des tickets conserve aussi sa fonctionnalité. La solution logicielle consiste à distribuer le service de distribution dans les noeuds ou à doubler le service. Ces deux solutions nécessitent des communications internodales supplémentaires afin d'assurer la cohérence de la distribution des tickets dans tout le système. Cela complique encore plus le logiciel de fonctionnement du système. De plus, en augmentant le nombre de communications internodales, le logiciel ralentit fortement la distribution des tickets.

### L'invention.

L'invention a pour but une distribution de tickets qui soulage le logiciel de fonctionnement d'un système informatique multinodal.

Un autre but est d'améliorer les performances de la distribution des tickets, en réduisant fortement le nombre et/ou les temps de communications internodales. La distribution peut alors se faire avec une faible latence et un grand débit.

Un autre but est de conserver l'avantage précédent dans un système multinodal de haute disponibilité.

Un autre but encore est de simplifier le procédé de distribution de tickets et sa mise en oeuvre.

L'invention a pour objet un procédé de distribution d'un ticket identifiant une tâche ou un événement dans un système informatique multinodal, caractérisé en ce qu'il consiste à déterminer parmi des noeuds du système un noeud maître de la distribution du ticket, à y inclure un moyen matériel générateur de ticket, à stocker l'adresse du générateur de ticket dans lesdits noeuds et, lorsque l'un desdits noeuds demande un ticket, à lire ladite adresse dans le noeud demandeur et à accéder au générateur de ticket.

Il en résulte un système informatique multinodal comprenant un mécanisme de distribution de ticket, un ticket identifiant une tâche ou un événement dans le système, caractérisé en ce que le mécanisme est réparti dans des noeuds du système en cellules respectives de distribution de ticket comprenant, dans un noeud maître, un moyen matériel générateur de ticket et, dans chacun desdits noeuds, un moyen de stockage de l'adresse du générateur de ticket et un moyen de commande d'accès au moyen de stockage du noeud correspondant et au générateur de ticket du noeud maître.

L'invention a pour objets un noeud informatique et un circuit intégré incorporant une cellule de distribution de ticket pour la mise en oeuvre du procédé ou du système défini précédemment.

Les caractéristiques et avantages de l'invention ressortent de la description qui suit, donnée à titre d'exemple et faite en référence aux dessins annexés.

Dans les dessins :
- la figure 1 est un schéma bloc illustrant la structure d'un système informatique multinodal conforme à l'invention ;
- la figure 2 est une vue schématique d'une structure de l'espace d'adressage du système représenté sur la figure 1 ;
- la figure 3 est une vue schématique de la structure d'une adresse d'entrée-sortie programmée d'un registre mis en oeuvre dans le système représenté sur la figure 1 ;
- la figure 4 est une vue schématique d'un exemple de structure d'une cellule du mécanisme de distribution de ticket conforme à l'invention mis en oeuvre dans le système représenté sur la figure 1, la cellule illustrée étant contenue dans le module local d'exécution des entrées programmées d'un module de communication intemodale inclus dans chaque noeud du système ;
- la figure 5 est une vue schématique de la structure d'un registre de référence du dispositif de distribution de ticket représenté sur la figure 4 ;
- la figure 6 est une vue schématique de la structure d'un registre de ticket du dispositif de distribution de ticket représenté sur la figure 4 ;
- la figure 7 est un organigramme illustrant des étapes d'un exemple de procédure d'obtention de ticket pour la mise en oeuvre du procédé de distribution de ticket dans le système représenté sur la figure 1 ;
- la figure 8 est un organigramme illustrant des étapes d'un exemple de procédure de traitement d'échec indiquée à la figure 7 pour la mise en oeuvre du procédé de distribution de ticket dans le système représenté sur la figure 1 ;
- la figure 9 est un organigramme illustrant des étapes d'un exemple de procédure d'initialisation pour la mise en oeuvre du procédé de distribution de ticket dans le système représenté sur la figure 1 ; et
- la figure 10 illustre les états des deux registres inclus dans les cellules, telles que celle représentée sur la figure 4, des quatre noeuds qui, dans le système représenté sur la figure 1, sont impliqués dans les procédures décrites en référence aux algorithmes représentés sur les figures 7 et 8.

### Description détaillée d'un exemple illustratif de l'invention.

### 1. Présentation préliminaire et définitions

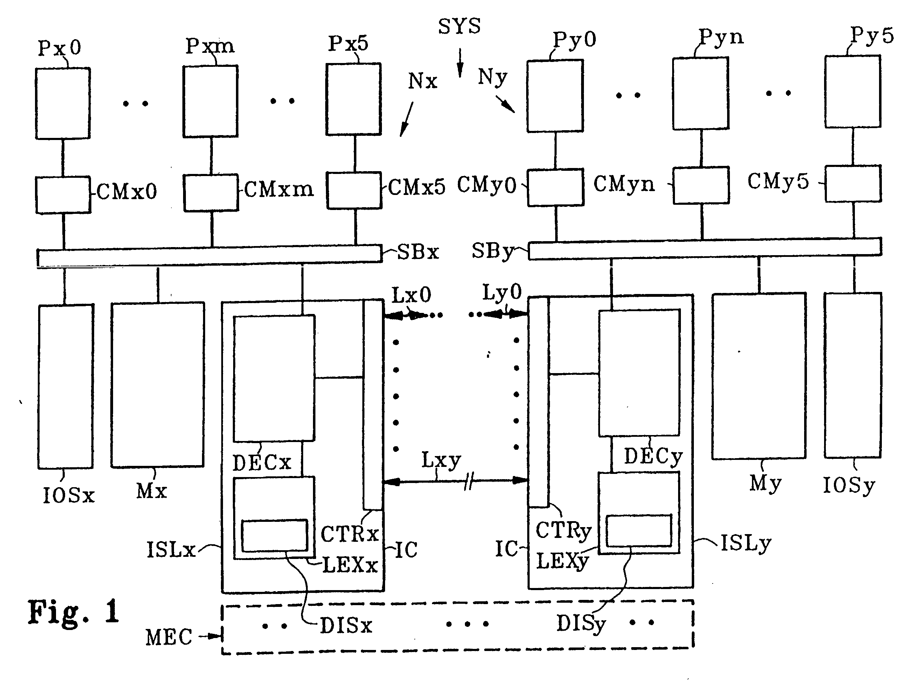

Le système informatique SYS représenté sur la figure 1 comprend une pluralité de noeuds de traitement N (Nx, Ny, ...) ayant chacun son propre système d'exploitation et fonctionnant donc de façon indépendante les uns des autres. Les noeuds N sont reliés entre eux par des liaisons de transmission L. Dans l'exemple illustré, les liaisons L sont des liaisons de transmission bidirectionnelle de données en série et portent dans leurs références les indications des numéros des deux noeuds que les liaisons respectives relient, de sorte que par exemple Lxy désigne la liaison reliant les noeuds Nx et Ny. L'emploi de liaisons de transmission intemodale de données en série est moins volumineux en termes de connectique que les liaisons classiques de transmission parallèle des données. Il permet donc l'utilisation d'un plus grand nombre de connexions point à point avec d'autres noeuds et la transmission d'un plus grand nombre de communications simultanées.

Chaque noeud comprend une pluralité de processeurs P dont les références indiquent le numéro du noeud et, éventuellement, le numéro d'ordre du processeur dans le noeud. Ainsi, Pxm désigne le processeur du noeud Nx d'ordre m. Le système SYS qui a été réalisé et qui sert d'exemple comprend huit noeuds de six processeurs chacun. Dans l'exemple illustré, on a considéré que chaque processeur P est connecté à une antémémoire CM, qui peut être intégrée dans le même circuit intégré que le processeur. Chaque noeud comprend aussi un bus système SB connecté aux antémémoires CM, à une mémoire M, à un sous-système d'entrée-sortie IOS et à un module de communication entre noeuds ISL (Inter System Link). Chacun de ces composants dans les noeuds Nx et Ny illustrés est affecté de l'indice x ou y du noeud correspondant. Le module ISLx, comme tous les autres modules du système, présente une interface interne avec le bus système SBx du noeud Nx ainsi qu'une interface externe avec les liaisons L reliant le noeud Nx aux sept autres noeuds du système et incluant ta liaison Lxy. Chaque module illustré ISL est de préférence inclus dans un circuit intégré IC.

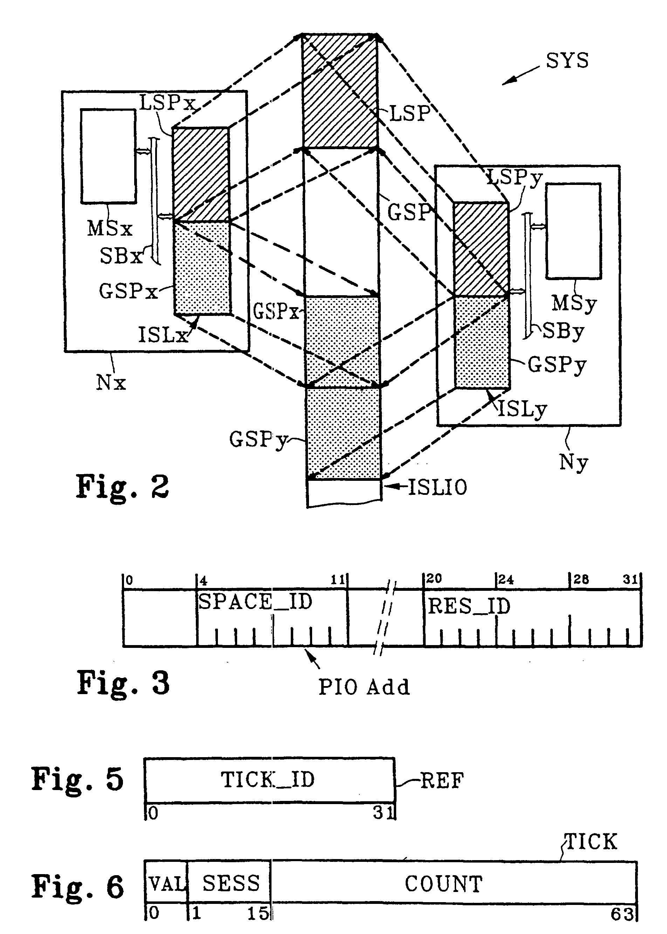

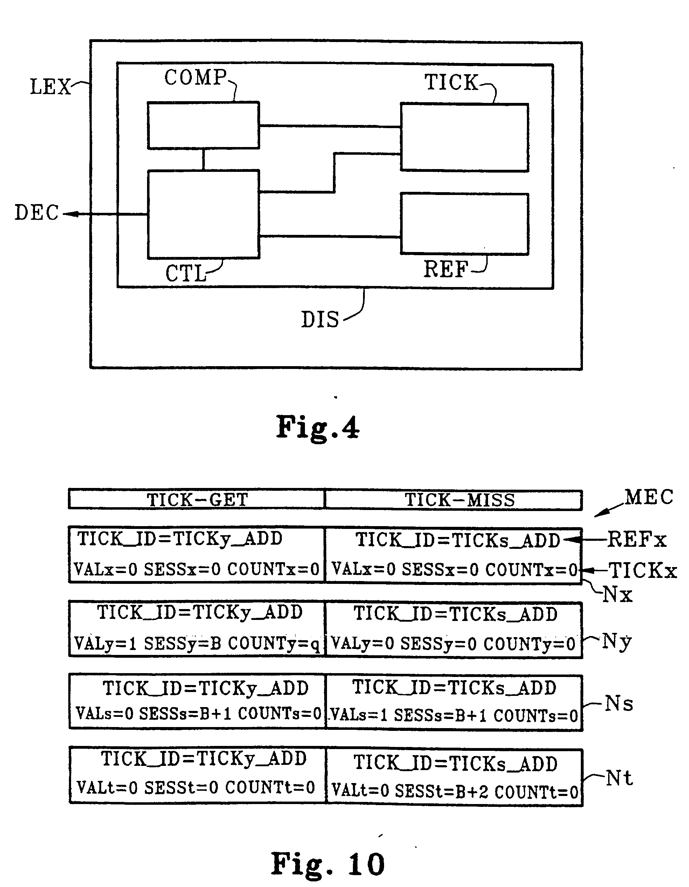

La figure 2 illustre une caractéristique du système SYS donné à titre d'exemple, non nécessaire mais avantageuse. Selon cette caractéristique, il existe dans le système SYS deux sortes d'espaces d'adressage, à savoir un espace mémoire MS et un espace d'entrée-sortie ISLIO. Un espace mémoire est l'espace normalement formé par les mémoires, tandis que l'espace d'entrée-sortie ISLIO est l'espace d'adressage disponible pour les registres que contient l'ensemble des modules ISL. A ces deux espaces correspondent deux types d'accès respectifs que traduisent les deux états d'un bit de requête T sur le bus système SB. On supposera que le bit de requête T = 0 correspond à l'accès dans l'espace mémoire MS et que T = 1 correspond à un accès dans l'espace ISLIO. D'autre part, dans le seul but de faciliter la compréhension de la description, les requêtes transmises par les bus systèmes et qui se rapportent aux deux espaces respectifs portent ici des noms différents : les requêtes Read/Write pour l'espace mémoire et les requêtes d'entrée-sortie programmées PIO Load et PIO Store pour l'espace ISLIO.

On a vu que l'espace d'adresses ISLIO dans un module ISL correspond à un espace d'adresses pour lequel l'accès s'effectue par une référence ayant un bit de requête T = 1. La capacité d'adressage de cet espace est par exemple 4 gigaoctets. L'espace ISLIO est physiquement réparti parmi tous les noeuds. La figure 2 illustre aussi cette répartition parmi les noeuds Nx et Ny indiqués à la figure 1. Chaque noeud y est schématiquement représenté par son bus système SBx, SBy respectif, par son espace mémoire MSx, MSy respectif et par sa portion d'espace ISLIO physiquement présent dans les modules lSLx, ISLy respectifs. L'espace ISLIO schématiquement et partiellement illustré dans la figure 2 se rapporte aux espaces d'adresses dans les modules ISL et se partage en un espace local LSP et un espace global GSP. L'espace local LSP, hachuré dans la figure 2, contient les registres accessibles seulement par le noeud auquel appartient le module ISL. Un même registre de module ISL est accédé à la même adresse par les processeurs P du noeud auquel le registre appartient, quel que soit le noeud. Une requête à une adresse de l'espace local LSP n'est donc jamais transmise à travers les liaisons L. En bref, l'espace LSP est un espace privé au noeud. Ceci est schématisé dans la figure 2 par le fait que les reports des espaces locaux LSPx et LSPy dans l'espace ISLIO, représentés par des traits discontinus, se font dans le même espace local LSP de l'espace ISLIO. L'espace global GSP, tacheté dans la figure 2, contient des registres adressables par tous les noeuds du système SYS. L'espace global GSP est divisé en un nombre de parties physiquement implantées dans les modules ISL des noeuds respectifs. Par exemple, comme indiqué par les traits discontinus dans la figure 2, les espaces globaux GSPx et GSPy de l'espace ISLIO sont implantés physiquement dans les modules lSLx et ISLy respectifs. L'espace global GSP est donc un espace d'adresses partagé et physiquement distribué. Par exemple, un champ de bits de l'adresse peut fournir une identification du noeud auquel appartient le registre relatif à cette adresse.

Dans l'exemple illustré, les modules ISL comprennent des ressources matérielles, des registres par exemple, dont les adresses appartiennent à l'espace ISLIO. Dans le cadre de l'exemple considéré, un processeur demandeur exécute un jeu d'instructions, parmi lesquelles LOAD désigne une instruction de lecture correspondant à une entrée dans le processeur qui exécute l'instruction, tandis que STORE désigne une instruction d'écriture correspondant à une sortie hors du processeur. Lorsque les instructions LOAD et STORE visent un registre d'un module ISL, des requêtes PIO Load ou PIO Store incorporant l'adresse du registre concerné sont envoyées sur le bus système SB correspondant au processeur émetteur. Le module ISL ayant ce registre reçoit les requêtes PIO Load et PIO Store et les interprète. Une requête PIO Load est une requête de lecture du contenu d'un registre du module ISL pour le transmettre au processeur demandeur. Une requête PIO Store est une requête d'écriture, dans un registre du module ISL, des données existant précisément dans le processeur demandeur et transitant sur le bus système SB.

L'exécution par un processeur des instructions LOAD et STORE est terminée lorsque le processeur reçoit du bus système une réponse à la requête PIO Load ou PIO Store qu'il a émise. La réponse à une requête PIO Load consiste en des données tandis que la réponse à une requête PIO Store est faite d'un acquittement. D'autre part, chaque module ISL peut être commandé pour changer l'état d'un composant interne au module ou pour y déclencher des actions spécifiques. Dans ce cas, les commandes ont la forme d'opérations PIO Load ou PIO Store à des adresses spécifiques. Ainsi, par une opération PIO Store par exemple, l'adresse spécifie l'action à prendre tandis que les données peuvent paramétrer la commande.

La figure 3 illustre un exemple d'adresse PIO, notée PIO Add. L'adresse PIO Add illustrée a trente-deux bits et inclut deux parties essentielles : un champ d'identification d'espace SPACE_ID et un champ d'identification de ressources RES_ID. Le champ SPACE_ID est fait de bits de poids forts, ici les huit bits 4:11, et représente une identification codée dans l'espace ISLIO, la valeur 0 désignant par exemple l'espace local LSP de l'espace ISLIO et les valeurs 1-8 identifiant les espaces globaux GSP relatifs aux noeuds respectifs N1-N8. Le champ d'identification de ressources RES_ID est fait des bits de poids faibles 20:31 et fournit une identification codée des ressources visées par l'opération, un registre par exemple.

Le principe de décodage d'une adresse PIO est le suivant. Si le champ d'identification d'espace SPACE_ID a la valeur 0, le registre est dans l'espace local LSP de l'espace ISLIO et la requête est transmise à un bloc local d'exécution des entrées-sorties programmées LEXx, qui est un élément matériel situé dans le module lSLx du noeud Nx considéré et qui est indiqué à la figure 1. Si l'identification d'espace SPACE_ID correspond à un identificateur noté NODE_ID du noeud Nx, la requête est aussi transmise au bloc local d'exécution LEXx. Autrement, la requête est à exécuter sur un noeud éloigné Ny par le bloc LEXy de ce noeud. Elle est donc transmise par la liaison Lxy, et la réponse retourne par la liaison Lxy au noeud Nx pour être transmise sur le bus système SBx jusqu'au processeur demandeur.

La figure 1 illustre aussi sous forme de schéma-bloc un exemple de structure interne d'un module ISL du système SYS. Le module ISLx, par exemple, est inclus dans un circuit intégré IC et comprend un décodeur DECx connecté au bus système SBx, un contrôleur de liaison internodale CTRx connecté aux liaisons L et au décodeur DECx, et le bloc local d'exécution LEXx connecté au décodeur DECx. Le décodeur DECx reçoit des signaux du bus système SBx et du contrôleur CTRx et les décode afin, notamment, de connaître le noeud auxquels ils sont destinés et les aiguiller vers leur destination. Par exemple, une requête issue d'un processeur Pxm et reçue du bus système SBx par le décodeur DECx sera dirigée soit vers le bloc LEXx si l'adresse du noeud correspond à celle du noeud Nx, soit vers le contrôleur CTRx si l'adresse désigne un noeud éloigné Ny. Réciproquement, une réponse transmise par la liaison Lxy et reçue par le contrôleur CTRx sera dirigée par le décodeur DECx vers le bus système SBx ou vers le bloc LEXx pour y être traité.

### 2. Description détaillée d'un exemple illustratif de l'invention.

La figure 1 illustre aussi sous forme schématique et partielle un exemple de mécanisme de distribution de ticket MEC conforme à l'invention, mis en oeuvre dans le système SYS. Le mécanisme MEC est réparti dans des noeuds du système en cellules respectives de distribution de ticket DIS. Pour simplifier l'exposé qui suit, chaque noeud du système est supposé contenir une cellule DIS. Par conséquent, le mécanisme illustré MEC est formé des huit cellules DIS (DlSx, DISy, ...) incluses dans les huit noeuds respectifs N du système SYS.

La figure 4 illustre schématiquement un exemple de structure préférée d'une cellule de distribution de ticket DIS conforme à l'invention. Selon cet exemple, la cellule DIS est identique dans chaque noeud N et est incluse dans le bloc local d'exécution LEX du module de communication ISL du noeud correspondant. Elle comprend un registre de référence REF, un générateur de ticket TICK, un compteur COMP et un dispositif de commande CTL. Le dispositif de commande CTL est connecté au compteur COMP, au registre REF et au générateur de ticket TICK. Le générateur dé ticket TICK est aussi connecté au compteur COMP et est formé dans l'exemple illustré d'un registre appelé registre de ticket. Le dispositif de commande CTL est aussi connecté, à l'extérieur du bloc LEX, au décodeur DEC du noeud. Les registres REF et TICK sont ainsi accessibles en lecture et en écriture par l'intermédiaire du dispositif de commande CTL. Dans un noeud particulier (Nx par exemple), la désignation de la cellule et de ses éléments inclura le numéro de ce noeud (DlSx, CTLx, ...).

La figure 5 illustre un exemple de format du registre de référence REF. C'est un registre de quatre octets contenant un champ d'adresse de ticket TICK_lD. Le champ TICK_ID représente l'adresse physique globale du registre de ticket TICK et fournit le chemin d'accès à ce registre. Le registre de référence REF est géré par deux adresses de l'espace ISLIO, appelées REF-LOCAL-ADD et REF-GLOBAL-ADD. L'adresse locale REF-LOCAL-ADD de l'espace local LSP est utilisée dans une opération de lecture PIO Load pour obtenir l'accès à un registre de ticket TICK. L'adresse globale REF-GLOBAL-ADD de l'espace global GSP est utilisée dans une opération PIO Load pour demander une procédure de migration du distributeur de ticket et dans une opération PIO Store pour modifier le chemin d'accès à un registre de ticket TICK, comme cela sera décrit ultérieurement.

La figure 6 illustre un exemple de format du registre de ticket TICK. C'est un banc de registres de huit octets contenant trois champs : un champ de validité VAL formé d'un bit (bit d'ordre 0) et représentatif de la validité du ticket ; un champ de session SESS formé des bits restants des deux premiers octets (bits 1:15) et représentatif d'un numéro de session ; et un champ de comptage COUNT formé des six octets suivants (bits 16-63) et représentatif de la valeur du compteur COMP. Le registre de ticket TICK est accessible dans l'espace global GSP. En fonctionnement, une opération de lecture PIO Load faite à l'adresse représentée par le champ TICK_lD du registre de référence REF fournit le contenu du registre de ticket TICK et incrémente le compteur COMP ainsi que le champ associé COUNT du registre de ticket TICK. Une opération d'écriture PIO Store à la même adresse enregistre les données dans les champs SESS et VAL et remet à zéro le compteur COMP. Le champ de session SESS et le champ de comptage COUNT forment le numéro du ticket. Le champ de comptage COUNT se rapporte à la session indiquée au champ SESS. Le champ SESS identifie chaque intervalle de temps dans l'ordre des accès au seul registre de ticket valide dans le système SYS. Le champ SESS représente donc une période de temps continue de distribution de ticket par le générateur de ticket dans le noeud maître. Si le noeud maître est un noeud prédéterminé, le champ SESS évolue progressivement à la suite des défaillances et initialisations successives du noeud ou du mécanisme de distribution de ticket. Si le noeud maître peut changer, le champ SESS évolue progressivement à chaque changement de noeud maître et/ou à chaque initialisation du noeud maître. Le champ de comptage COUNT du registre TICK délivrant un ticket valide identifie les accès en cours dans l'intervalle de temps identifié par le champ SESS. Il représente donc, au cours d'une session identifiée par le champ SESS, le nombre d'accès au générateur de ticket du noeud maître au moment de l'accès à ce générateur pour obtenir un ticket. On a vu qu'il est remis à zéro lors d'une opération PIO Store faite à l'adresse indiquée par le champ TICK_ID. On supposera que l'ordre des accès évolue de manière croissante, par incrémentation des champs SESS et COUNT et que la validation est représentée par le bit VAL = 1. Il pourrait bien sûr évoluer de manière décroissante.

Le dispositif de commande CTL exécute des accès en lecture ou en écriture aux registres d'une cellule DIS à laquelle il appartient ou à ceux des cellules DIS des autres noeuds. Par un accès en lecture le dispositif de commande CTL obtient le contenu des registres de la cellule DIS tandis qu'un accès en écriture y enregistre des données. Le dispositif de commande CTL connaît le numéro du noeud auquel il appartient et les adresses des registres REF et TICK. Un accès en lecture du registre REF à l'adresse REF-LOCAL-ADD par le ou les processeurs du noeud est une demande de ticket et déclenche une action du dispositif de commande CTL. Cette action consiste à acquérir le ticket pour le donner en réponse à l'accès en lecture. L'unicité du ticket repose sur le fait qu'à tout moment il n'y a qu'un seul registre de ticket TICK valide. Le noeud qui contient le seul registre de ticket valide est appelé noeud maître et la cellule distributrice DIS d'un ticket valide est appelée le distributeur de ticket. Par conséquent, seul le registre maître TICK a donc son champ VAL = 1.

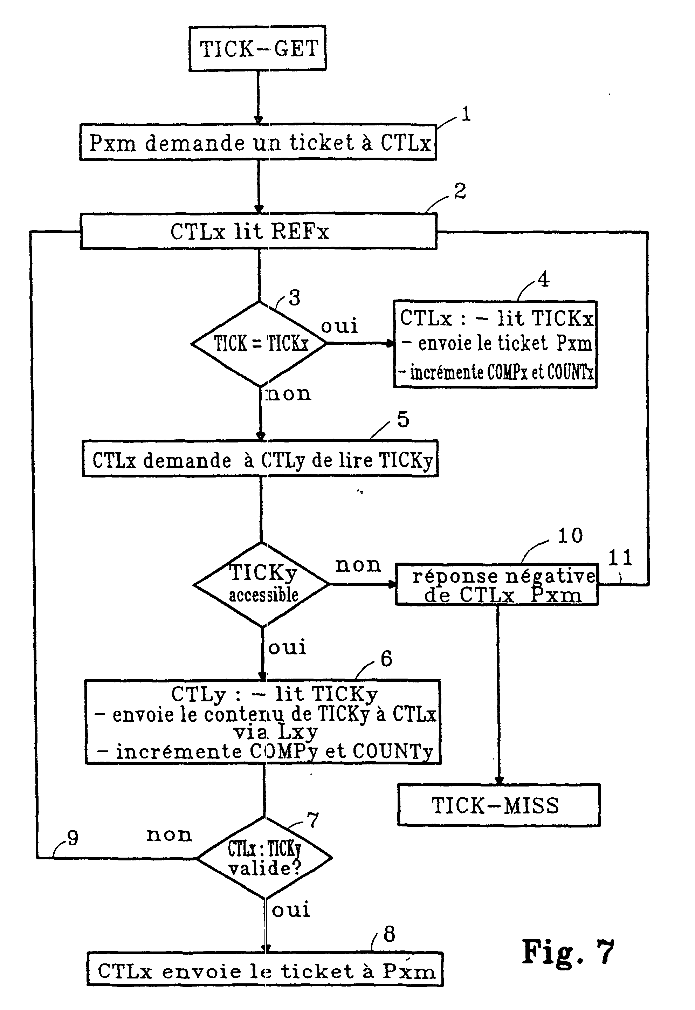

Le procédé de distribution de ticket conforme à l'invention comprend, selon l'exemple considéré, une procédure d'obtention de ticket TICK-GET, une procédure de traitement d'échec TICK-MISS et une procédure d'initialisation INIT, respectivement illustrées par les organigrammes des figures 7, 8 et 9.

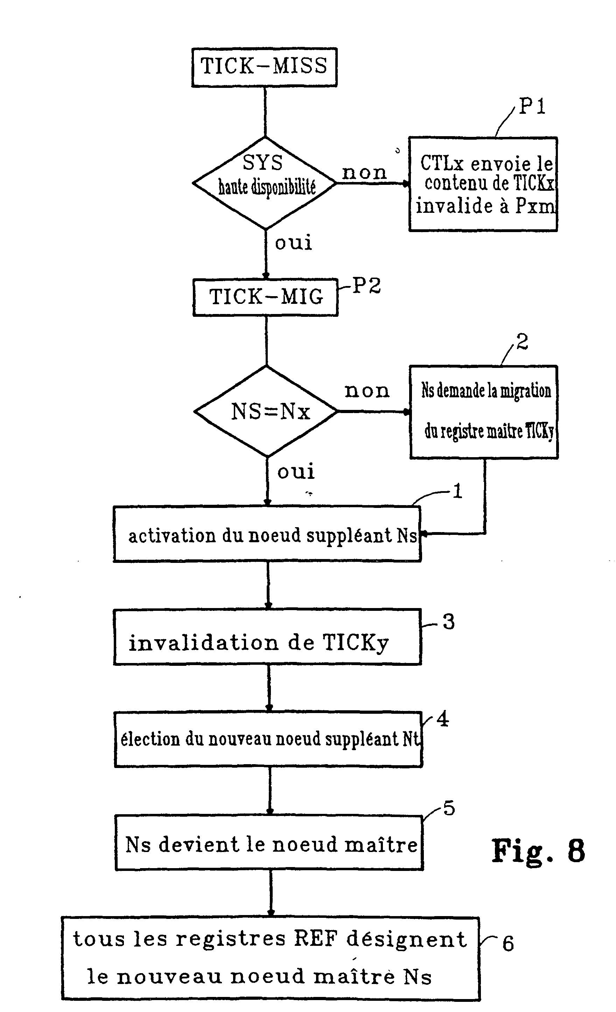

La figure 10 est une vue sous forme schématique et partielle du mécanisme de distribution de ticket MEC réparti dans les quatre noeuds du système SYS qui sont impliqués par le procédé décrit en référence aux figures 7 et 8. La figure 10 illustre les registres REF et TICK des cellules correspondantes et les états que prennent ces registres lors des procédures d'obtention de ticket TICK-GET et de traitement d'échec TICK-MISS. La partie de gauche se rapporte à la procédure TICK-GET et suppose que le noeud maître est le noeud Ny et que le noeud demandeur d'un ticket est le noeud Nx. La partie de droite se rapporte à la procédure TICK-MISS.

La figure 7 illustre des étapes de la procédure d'obtention de ticket TICK-GET, tandis que les états des registres REF et TICK durant cette procédure sont indiqués à la partie gauche des noeuds représentés sur la figure 10.

A l'étape 1, on suppose que dans le système SYS le logiciel s'exécutant sur le noeud Nx veuille obtenir un ticket. Un processeur Pxm du noeud Nx exécutant ce logiciel traite alors une instruction de lecture du registre REFx à l'adresse REF-LOCAL-ADD de l'espace local LSP de l'espace ISLIO. Il en résulte une requête REQx (requête PIO Load) de lecture du registre REFx de la cellule DISx du noeud Nx. Le décodeur DECx reçoit la requête REQx, la décode et la transmet au dispositif de commande CTLx.

A l'étape 2, le dispositif de commande CTLx lit le registre REFx et analyse le champ TICK_lD du registre REFx, qui fournit l'adresse du registre de ticket TICK du distributeur de ticket DIS dans le système SYS. Ce registre est appelé registre maître de ticket.

A l'étape 3, le dispositif de commande CTLx vérifie si le registre maître de ticket est le registre TlCKx du noeud Nx.

L'étape 4 a lieu si le noeud Nx est le noeud maître. Dans ce cas, le contenu TICK_lD du registre REFx correspond à l'adresse du registre TICKx (TICK_lD = TICKX_ADD). Cette étape n'est pas illustrée dans la figure 10. Le dispositif de commande CTLx lit le registre de ticket TlCKx et transmet son contenu au processeur Pxm. En supposant que la session actuelle des accès au registre de ticket valide TlCKx a la valeur B et que le nombre des accès à ce registre dans cette session est p, le processeur Pxm reçoit donc le contenu suivant du registre TICKx, qui représente le contenu du ticket reçu :
TICKx : VALx = 1, SESSx = B, COUNTx = p.

Puis, dans cette même étape, le dispositif de commande CTLx incrémente d'une unité le compteur COMPx. Le nouveau champ de comptage COUNTx du registre TlCKx est donc aussi incrémenté d'une unité (COUNTx = p + 1). Le numéro du prochain ticket est donc B, p+1.

L'étape 5 a lieu si l'adresse TICK_lD donnée par le registre de référence REFx indique que le registre maître de ticket est dans un noeud éloigné, le noeud Ny par exemple, qui est donc le noeud maître (TICK_lD = TICKy_ADD). Le dispositif de commande CTLx envoie une commande de lecture du registre de ticket TICKy du noeud Ny. Cette commande transite par un chemin d'accès incluant le décodeur DECx, le contrôleur CTRx, la liaison Lxy, le contrôleur CTRy, le décodeur DECy et le dispositif de commande CTLy du distributeur de ticket DISy.

La question se pose alors de savoir si le registre maître TICKy est accessible ou non par CTLx. Le registre TICKy peut ne pas être accessible à cause d'une défaillance du noeud Ny ou dans le chemin d'accès au registre maître TICKy, par exemple à cause d'une défaillance de la liaison Lxy.

L'étape 6 se produit si le registre maître TICKy est accessible. Alors le dispositif de commande CTLy lit le contenu de ce registre et l'envoie au noeud demandeur Nx comme réponse à sa demande. Le numéro du ticket lu dans le registre TICKy et envoyé au noeud Nx est donc SESSy = B et COUNTy = q. Le contrôleur CTRx du module lSLx du noeud Nx reçoit la réponse et l'envoie au dispositif de commande CTLx. A la suite de la lecture du registre TICKy, le dispositif de commande CTLy incrémente le compteur COMPy et, par conséquent, le champ de comptage COUNTy du registre TICKy (COUNTy = COUNTy + 1).

A l'étape 7, le dispositif de commande CTLx vérifie si le contenu du registre TICKy est valide. La validité est indiquée par la valeur du champ VAL (VAL = 1) et signifie que le registre TICKy est le registre maître de ticket dans le système SYS. Si le contenu du registre TICKy est valide, il constitue le ticket demandé.

L'étape 8 se produit si le contenu du registre maître TICKy est valide. Le dispositif de commande CTLx transmet donc le ticket au processeur demandeur Pxm comme réponse à la requête REQx de lecture du registre de référence REFx.

L'étape 9 a lieu si le registre de ticket TICKy est accessible mais son contenu n'est pas valide. Cela signifie que le noeud Ny, au moment de la lecture du registre TICKy, n'est plus le noeud maître et qu'entre l'instant de lecture du registre de référence REFx à l'étape 2 et l'instant de lecture du registre maître TICKy désigné par le registre REFx, le mécanisme MEC a désigné et rendu effectif un autre registre maître tout en invalidant le registre maître TICKy. L'opération correspondant au changement de registre maître est appelée une migration du registre maître de ticket ou migration du distributeur de ticket et sera décrite ultérieurement. L'étape 9 consiste à retourner à l'étape 2. Si la migration est terminée, le noeud Nx reçoit le ticket du nouveau noeud maître. Sinon, la répétition de ce cycle permet au noeud Nx de recevoir le ticket demandé.

L'étape 10 a lieu si le registre maître TICKy n'est pas accessible. Le dispositif de commande CTLx du noeud demandeur Nx reçoit une réponse négative à sa demande. Cette étape représente donc un échec à la demande de ticket faite par le processeur Pxm par suite d'une défaillance. Cette réponse déclenche la procédure de traitement d'échec TICK-MISS du procédé de distribution de ticket.

L'étape 11 suppose que la procédure de traitement d'échec TICK-MISS, telle qu'illustrée dans la figure 8, comprend la procédure P2 de migration du registre maître. L'étape 11 de la procédure TICK-GET consiste alors à répéter la demande de ticket en retournant à l'étape 2, de manière similaire à l'étape 9.

La figure 8 illustre un exemple de procédure de traitement d'échec TICK-MISS. Cette procédure est déclenchée à l'étape 10 de la procédure d'obtention de ticket TICK-GET.

La procédure TICK-MISS est conditionnée par la nature du système SYS. Le traitement d'échec est différent selon que le système est ou n'est pas à haute disponibilité renforcée par le matériel.

La procédure P1 de traitement d'échec a lieu si le système n'est pas à haute disponibilité. Le dispositif de commande CTLx du noeud demandeur Nx peut par exemple renvoyer, en réponse à la requête REQx du processeur Pxm, le contenu invalide du registre de ticket TICKx (VALx = 0). La tâche en cours du processeur Pxm ne peut donc pas se poursuivre. Elle se termine ou avorte, et un message indique qu'un échec a eu lieu à cause d'une défaillance du noeud Ny ou dans le chemin entre le dispositif de commande CTLx et le registre de ticket TICKy. Le processeur Pxm ne pourra exécuter de nouveau la tâche que si le noeud maître Ny est de nouveau actif ou si le registre TICKy est redevenu accessible, ou encore si un autre registre maître a été activé et le mécanisme de distribution de ticket a été réinitialisé.

La procédure P2 a lieu si le système est à haute disponibilité renforcée par le matériel. La procédure P2 est appelée procédure de migration automatique TICK-MIG du registre maître de ticket inaccessible TICKy vers un noeud suppléant Ns. La description de la procédure P2 nécessite auparavant la présentation de la procédure d'initialisation INIT.

Pour que la procédure d'obtention de ticket TICK-GET se déroule normalement, il faut que l'ensemble des registres REF et TICK du mécanisme de distribution de ticket MEC réparti dans tous les noeuds du système SYS soient initialisés correctement lors du démarrage du mécanisme MEC. Pour cela, une routine logicielle d'initialisation s'exécute dans le noeud choisi pour être le premier noeud maître, Ny en l'occurrence.

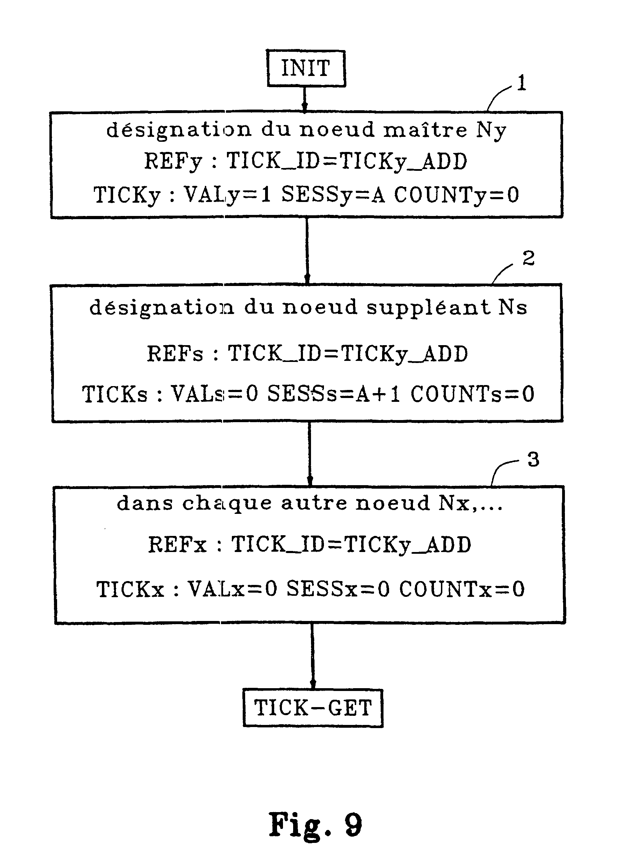

La figure 9 illustre un exemple d'algorithme représentatif de la procédure d'initialisation INIT. Elle fait intervenir les étapes suivantes, correspondant toutes à des opérations d'écriture.

A l'étape 1 le noeud maître Ny est désigné et ses registres REFy et TICKy sont initialisés. Dans le registre TICKy, le champ VAL est validé (VALy = 1), le champ de session SESSy prend une valeur initiale prédéterminée A, pouvant être au départ le nombre 1 par exemple, et le compteur COMP est mis à zéro, d'où COUNTy = 0. Dans le registre REFy, on écrit dans le champ TICK_ID l'adresse du registre TICKy(TICK_ID = TICKy_ADD).

Il est à noter que si la procédure TICK-GET décrite précédemment avait eu lieu juste après l'initialisation, le ticket aurait eu le numéro de TICKy à l'initalisation. Cependant, le numéro qui a été décrit et indiqué à la figure 10 suppose une autre session B et un autre compte COUNT de valeur q.

A l'étape 2 de la procédure d'initialisation, un noeud suppléant Ns est désigné. Il peut être déterminé par une règle simple, choisie à la conception du système. Dans l'exemple illustré, le système SYS désigne comme noeud suppléant Ns le noeud ayant le numéro d'ordre suivant (Ns = Ny+1). Les registres du noeud suppléant sont alors initialisés. Dans le registre suppléant de ticket TICKs le champ VAL est invalidé (VALs = 0), le champ SESSs prend la valeur initiale A du registre maître, incrémentée d'une unité (SESSs = A+1) et le compteur COMP est mis à zéro (COUNTs = 0). Dans le registre suppléant de référence REFs, on écrit dans le champ TICK_lD l'adresse du registre TICKy.

Il est à noter en particulier que, dans l'exemple illustré, le registre de ticket suppléant TlCKs est désigné en écrivant dans son champ de session le numéro de la session suivante dont il sera le maître et en mettant à zéro son champ COUNT. Dans l'état de la procédure TICK-GET décrite en référence aux figures 7 et 10, qui est postérieur à l'initialisation, on a considéré que la session avait le numéro B. Le registre suppléant TICKs a donc alors le contenu suivant, lorsque le registre maître Ny est valide:
TICKs : VALs = 0, SESSs = B+1 et COUNTs = 0.

C'est donc ce contenu qui apparaît sur la figure 10.

A l'étape 3 de la procédure d'initialisation sont mis à jour les registres de tous les autres noeuds, le noeud Nx étant choisi comme exemple. Dans le registre TICKx, le champ VAL est invalidé (VALx = 0), le champ SESS prend une valeur nulle (SESSx = 0) et le compteur COMP est remis à zéro (d'où COUNTx = 0). Dans le registre REFx, le champ TICK_ID prend l'adresse du registre TICKy. A cette étape, tous les composants du service de distribution de tickets sont initialisés et la procédure d'obtention de ticket TICK-GET peut commencer et être exécutée de façon répétitive.

La figure 8 illustre des étapes d'un exemple de procédure P2 de migration TICK-MIG. La figure 10 indique l'évolution des états des registres REF et TICK dus à la migration du registre maître de ticket.

La procédure TICK-MIG consiste à activer le noeud suppléant Ns et à désactiver le noeud maître Ny. Dans l'exemple illustré, c'est le noeud suppléant Ns qui procède à la migration du distributeur de tickets. La procédure TICK-MIG peut être exécutée dans le noeud suppléant, soit par son dispositif de commande CTLs, soit par une routine logicielle déclenchée par une interruption venant de ce dispositif de commande. Lorsque la migration est terminée, le noeud suppléant Ns est devenu le nouveau noeud maître et un nouveau noeud suppléant Nt est prêt à assurer la continuité de la distribution de tickets en cas d'échec à un accès au nouveau registre maître TICKs.

L'étape 1 de la procédure TICK-MIG consiste en l'activation du noeud suppléant Ns. Elle a directement lieu si le noeud ayant subi l'échec est le noeud suppléant. En l'occurrence, Ns = Nx. Le noeud Nx sait qu'il est le noeud suppléant, soit parce que le champ TICK_lD de son registre de référence REFx indique que le noeud maître Ny a la valeur Nx - 1, soit parce que le champ de session SESSx n'est pas nul. Ce cas n'est pas illustré dans la figure 10.

L'étape 2 a lieu si le noeud suppléant Ns n'est pas le noeud demandeur Nx. Le dispositif de commande CTLx de la cellule DlSx demande la migration du distributeur de ticket vers le noeud suppléant Ns en faisant un accès en lecture à l'adresse REF-GLOBAL-ADD du registre REFs du noeud suppléant. Cette étape conduit à l'étape 1 d'activation du distributeur de ticket DISs.

L'étape 3 consiste à demander le verrouillage du noeud maître Ny pour qu'il ne puisse plus distribuer de ticket valide. Cette opération est sans effet si le noeud Ny est réellement défaillant. Par contre, si par exemple l'échec est dû à la défaillance de la liaison Lxy, le registre maître de ticket TICKy est inaccessible pour le noeud demandeur Nx alors qu'il reste capable de délivrer aux autres noeuds du système des tickets valides. L'étape 4 est donc une sécurité pour assurer l'unicité des tickets délivrés. Le nouveau contenu du registre TICKy est donc
TICKy : VALy = 0, SESSy = 0 et COUNTy = 0.

L'étape 4 consiste à élire un nouveau suppléant Nt. On écrit donc dans le champ SESSt du registre TICKt le numéro de la session suivante : SESSt = SESSs + 1 =B + 2.

A l'étape 5, le noeud suppléant Ns devenant le nouveau maître, le champ VALs de son registre TlCKs est donc validé (VALs = 1).

A l'étape 6, tous les noeuds du système SYS reçoivent le chemin d'accès au nouveau générateur de ticket valide TICKs. Ceci est fait par écriture, dans le champ TICK_lD des registres REF de tous les noeuds, de l'adresse du nouveau registre maître de ticket TlCKs (TICK_ID = TlCKs_ADD). Cette étape termine la procédure de migration TICK-MIG. La répétition de la demande d'un ticket par le dispositif de commande CTLx selon l'étape 11 de la procédure TICK-GET représentée sur la figure 7 conduira à lire la nouvelle adresse TlCKs_ADD du registre maître de ticket TICKs et à y obtenir un ticket valide.

Il ressort de cette description que l'exemple préféré du procédé conforme à l'invention demande un fonctionnement relativement complexe aux dispositifs de commande CTL dans les cellules de distribution de ticket. D'une manière générale, plusieurs solutions sont possibles pour alléger le fonctionnement des cellules DIS. Cependant, la simplicité croissante de la mise en oeuvre du procédé de l'invention se traduit par une diminution proportionnelle des performances du procédé de distribution de tickets conforme à l'invention.

Selon un premier exemple, la procédure de migration TICK-MIG n'est pas exécutée par le dispositif de commande CTL comme illustré, mais elle est exécutée entièrement par une routine logicielle. Dans ce cas, la fonction du dispositif de commande CTL peut être remplie par un processeur P du noeud, ou par un microprocesseur ou un microcontrôleur incorporé dans le module qui accède aux registres REF et TICK, tel que le module ISL dans l'exemple illustré. Des variantes peuvent exister selon le partage choisi entre ce qui est exécuté sous forme matérielle par le dispositif de commande CTL et sous forme de logicielle.

Selon un second exemple, une plus grande simplification peut être obtenue en faisant traiter tout ou partie de la procédure TICK-GET par un processeur de chaque noeud impliqué, ou par un microprocesseur ou un microcontrôleur incorporé au module qui accède aux registres REF et TICK, tel que le module ISL dans l'exemple illustré.

D'autres variantes peuvent être apportées à l'évidence par l'homme du métier à l'exemple illustré. Par exemple, on a supposé, pour faciliter le présent exposé, que le mécanisme de distribution de ticket MEC est réparti dans tous les noeuds du système SYS. Cependant, tous les noeuds d'un système peuvent ne pas avoir besoin de tickets, le mécanisme dé distribution de tickets n'impliquant alors qu'une partie des noeuds, au moins deux. D'autre part, chaque noeud peut avoir un nombre quelconque de processeurs et les liaisons internodales L peuvent être des liaisons sérielles ou parallèles. En outre, un module de liaison internodale ISL peut être considéré comme un élément du sous-système d'entrée-sortie IOS du noeud et pourrait y être incorporé.

La précédente description du mécanisme de distribution de ticket MEC fait aussi ressortir que chaque noeud impliqué doit avoir l'adresse TICK_ID du registre maître de ticket. Cependant, cette adresse pourrait être stockée dans un autre moyen que le registre de référence REF illustré. Ce moyen peut être par exemple la mémoire M du noeud, où l'adresse TICK_lD serait stockée dans un emplacement de cette mémoire. Dans ce cas, l'accès à cet emplacement peut être effectué rapidement par tout processeur P du noeud. L'emploi du registre REF est préférable lorsqu'il peut être en relation avec un dispositif de commande CTL illustré, ou, comme on l'a vu aussi, avec un microprocesseur ou un microcontrôleur, qui évitent au processeur d'exécuter toute la procédure TICK-GET et/ou la procédure TICK-MIG.

D'autre part, il n'est pas nécessaire que chaque noeud incorpore un registre de ticket TICK. Seul le noeud maître peut avoir un générateur de ticket TICK dans le système. On peut aussi prévoir, comme cela est fait dans la procédure de traitement d'échec illustrée TICK-MIG, au moins un noeud incluant un registre de ticket TICK pour jouer le rôle de suppléant. Dans un système ayant un petit nombre de noeuds, il est préférable que chaque noeud ait un registre de ticket TICK. Mais dans un système ayant un grand nombre de noeuds impliqués, seuls des noeuds communément opérationnels pourraient détenir un registre de ticket TICK. D'autre part, la description qui précède d'un registre de ticket TICK comme moyen matériel générateur de ticket ne donne qu'un exemple parmi d'autres possibles. Dans une forme simplifiée, le générateur de ticket TICK pourrait simplement être un compteur, tel que le compteur COMP. L'avantage du registre TICK est de pouvoir inclure d'autres champs que le champ COUNT. Le champ de validation VAL n'est pas nécessaire si un seul noeud a un générateur de ticket. Il en est de même pour le champ de session SESS, dans le cas par exemple où un seul noeud a un générateur de ticket et le nombre d'accès à ce registre serait toujours comptabilisé, indépendamment des défaillances du noeud, de façon à conserver l'unicité des tickets dans une longue période de temps assurant toute absence de conflits entre deux tickets.

D'une manière générale, l'invention a donc pour objet un procédé de distribution d'un ticket identifiant une tâche ou un événement dans un système informatique multinodal SYS, le procédé consistant à déterminer parmi des noeuds du système un noeud maître Ny de la distribution du ticket, à y inclure un moyen matériel générateur de ticket TICK, à stocker l'adresse TICK_lD du générateur de ticket dans lesdits noeuds et, lorsque l'un desdits noeuds demande un ticket, à lire ladite adresse dans le noeud demandeur et à accéder au générateur de ticket.

Selon un premier perfectionnement illustré, chaque ticket est identifié par un premier champ SESS représentatif d'une période de temps continue de distribution de ticket par le générateur de ticket dans le noeud maître et par un second champ COUNT représentatif, au cours de cette période, du nombre d'accès au générateur de ticket qui ont déjà été faits au moment de l'accès correspondant à ladite demande de ticket. On a vu que le passage d'une session à une autre peut correspondre à un changement de localisation du générateur de ticket, ou à une défaillance du noeud maître. Elle permet aussi de réinitialiser le champ de comptage COUNT tout en conservant l'unicité du ticket.

Bien qu'un seul noeud puisse posséder un moyen matériel générateur de ticket, un second perfectionnement illustré consiste à inclure un moyen matériel générateur de ticket dans au moins deux noeuds du système et à ne valider que le générateur de ticket du noeud maître. Cela offre l'avantage de pouvoir remplacer le noeud maître. L'une des causes possibles de remplacement est une défaillance du noeud maître ou dans le chemin d'accès au générateur maître de ticket. Dans l'exemple illustré, le mécanisme de distribution de ticket détermine un noeud suppléant Ns pour le remplacement du noeud maître. La désignation du noeud suppléant peut être faite autrement que celle illustrée. Le remplacement peut aussi se faire selon diverses formes, notamment selon que le système est ou non à haute disponibilité renforcée par le matériel. En d'autres termes, un système peut à divers degrés être tolérant aux pannes. S'il l'est, l'option décrite à titre d'exemple procure une amélioration sensible des performances en mettant en oeuvre une procédure de remplacement automatique dite procédure de migration TICK-MIG.

La procédure de migration met à jour de façon cohérente les générateurs de ticket TICK et les registres de référence RÉF dans tous les noeuds impliqués, afin d'assurer l'unicité du ticket et la continuité de la distribution. Cette mise à jour s'effectue de préférence par des écritures successives, comme illustré, de façon à éviter tout conflit dans le mécanisme MEC qui pourrait être dommageable à sa cohérence. Par cette procédure, le noeud suppléant devient le nouveau noeud hôte du générateur de ticket valide. Alors, l'adresse TICK_ID du générateur de ticket est modifiée en conséquence dans tous les registres de référence REF. En outre, le générateur de ticket du précédent noeud maître est invalidé. L'exemple illustré comporte d'autres caractéristiques facultatives mais avantageuses. D'abord, le noeud suppléant est chargé du remplacement, c'est-à-dire ici de l'exécution de la procédure de migration. Ensuite, lorsque le noeud demandeur d'un ticket ne peut pas accéder au générateur de ticket du noeud maître et qu'il est le noeud suppléant, il exécute la migration. Si le noeud demandeur d'un ticket n'est pas le noeud suppléant, il demande au noeud suppléant de remplacer le noeud maître. Cette demande est faite au moyen d'un accès spécifique à un registre de la cellule DIS du noeud suppléant, l'accès consistant en l'occurrence en une lecture distante du registre REF du noeud suppléant. Dans les deux cas, il suffit au noeud demandeur d'un ticket de répéter la demande de ticket pour accéder au nouveau générateur maître. La demande d'un ticket est aussi répétée lorsque la demande précédente se produit durant la période de remplacement du noeud maître, afin d'accéder au nouveau générateur maître. Bien sûr, d'autres possibilités sont offertes.

Il en résulte un système informatique multinodal SYS comprenant un mécanisme de distribution de ticket MEC dans des noeuds du système, un ticket identifiant une tâche ou un événement dans le système, le mécanisme comprenant, dans un noeud maître, un moyen matériel générateur de ticket TICK et, dans chacun desdits noeuds, un moyen de stockage REF de l'adresse TICK_lD du générateur de ticket et un moyen de commande (P, CTL) d'accès au moyen de stockage du noeud correspondant et au générateur de ticket du noeud maître.

Cette définition est calquée sur celle du procédé et n'inclut pas la notion de cellule de distribution de ticket DIS du mécanisme illustré. La définition d'une telle cellule peut être cependant élargie. Il a été dit que le moyen de stockage peut être une mémoire ou un emplacement de mémoire. De même, le moyen de commande d'accès au moyen de stockage REF et au générateur de ticket TICK peut être un processeur du noeud au lieu du dispositif CTL. La définition qui suit de l'invention inclut un processeur dans la notion de cellule.

Un système informatique multinodal SYS conforme à l'invention comprend un mécanisme de distribution de ticket MEC, un ticket identifiant une tâche ou un événement dans le système, le mécanisme étant réparti dans des noeuds du système en cellules respectives de distribution de ticket DIS comprenant, dans un noeud maître, un moyen matériel générateur de ticket et, dans chacun desdits noeuds, un moyen de stockage (REF) de l'adresse (TICK_lD) du générateur de ticket et un moyen de commande (P, CTL) d'accès au moyen de stockage du noeud correspondant et au générateur de ticket du noeud maître.

Selon une variante de l'exemple illustré, les cellules d'au moins deux desdits noeuds incluent chacune un moyen matériel générateur de ticket TICK et le mécanisme MEC comprend des moyens de validation (CTL, VAL) du générateur de ticket du noeud maître.

Le moyen de commande d'accès peut être le même pour les deux accès ou bien être différent selon que l'accès est au moyen de stockage REF ou au générateur de ticket. Par exemple, l'accès au moyen de stockage peut être commandé par un processeur P et l'accès au générateur de ticket par un moyen différent, tel qu'un microprocesseur. Selon l'option avantageuse choisie, le moyen de commande est commun aux deux accès et n'est pas un processeur. C'est un moyen intermédiaire entre le processeur et le registre REF et optionnellement le registre TICK du noeud, tel que le dispositif de commande CTL illustré. On a vu que celui-ci réagit à une demande de ticket par un processeur du noeud pour lire dans le moyen de stockage de ce noeud l'adresse TICK_lD du générateur de ticket, accéder à ce générateur pour avoir le ticket et envoyer le ticket au processeur demandeur comme réponse à sa demande. Cependant, on a vu que une partie de ces tâches peuvent lui être confiées. En d'autres termes, et d'une manière générale, le moyen de commande autre qu'un processeur est, dans un noeud, relié à au moins un processeur de ce noeud.

Selon une autre option avantageuse, le mécanisme de distribution de ticket MEC inclut des moyens d'écriture dans le moyen de stockage REF et/ou dans le générateur de ticket d'une cellule DIS. Les moyens illustrés sont contenus dans le dispositif de commande CTL incorporé dans la cellule. L'écriture dans le registre REF suppose que l'adresse contenue dans ce registre peut changer, notamment en cas de défaillance du noeud maître. On peut ainsi écrire la nouvelle adresse TICK_ID du registre maître de ticket TICK dans tous les registres REF du système. D'autre part, dans le système illustré, l'écriture dans le générateur de ticket est faite pour changer le numéro du ticket dans les champs SESS et COUNT, ou pour mettre à jour le numéro de session dans le noeud maître et le noeud suppléant, ou pour valider le ticket dans le champ VAL.

Dans le système SYS illustré, chaque cellule de distribution de ticket DIS d'un noeud est incorporée dans un module de communication internodale ISL contenu de préférence dans un circuit intégré IC. La cellule a ainsi l'avantage de profiter, dans le module ISL, de la liaison au bus SB et d'un contrôleur de liaison internodale CTR. Cependant, le module ISL peut ne pas être connecté directement au bus système SB, mais sur un autre bus tel qu'un bus d'entrée-sortie, un bus PCI (Peripheral Component lnterconnect) par exemple. D'autre part, la cellule pourrait être contenue dans un autre circuit intégré, séparé du module ISL et connecté à un bus du noeud. Dans ce cas, il devra être connecté à un bus du système, le bus système SB illustré ou un autre, et les échanges avec le processeur et le module ISL devront transiter par ce bus. Cependant, d'une manière générale, le chemin d'accès au moyen de stockage du noeud et au générateur de ticket du noeud maître peut ne pas inclure un bus. On a vu aussi que les fonctions du dispositif de commande CTL peuvent être exécutées par des circuits logiques dédiés, ou être programmées dans un microprocesseur ou un microcontrôleur, par exemple embarqué dans le circuit intégré incorporant le module ISL, ou encore être exécutées par un processeur du noeud.

L'invention a donc pour objet corollaire un noeud informatique, Nx par exemple, comprenant au moins un processeur Pxm, une mémoire Mx, un bus SBx et une cellule de distribution de ticket DIS pour la mise en oeuvre du procédé ou du système défini précédemment.

L'invention a aussi pour objet corollaire un circuit intégré IC incorporant une cellule de distribution de ticket DIS pour la mise en oeuvre du procédé ou du système qui viennent d'être présentés.

## Revendications

1. Procédé de distribution d'un ticket identifiant une tâche ou un événement dans un système informatique multinodal (SYS), **caractérisé en ce qu'**il consiste à déterminer parmi des noeuds du système un noeud maître (Ny) de la distribution du ticket, à y inclure un moyen matériel générateur de ticket (TICK), à stocker l'adresse (TICK_lD) du générateur de ticket dans lesdits noeuds et, lorsque l'un desdits noeuds demande un ticket, à lire ladite adresse dans le noeud demandeur et à accéder au générateur de ticket.

2. Procédé selon la revendication 1, **caractérisé en ce qu'**il consiste à identifier chaque ticket par un premier champ (SESS) représentatif d'une période de temps continue de distribution de ticket par le générateur de ticket dans le noeud maître et par un second champ (COUNT) représentatif, au cours de ladite période, du nombre d'accès audit générateur de ticket au moment dudit accès correspondant à ladite demande de ticket.

3. Procédé selon la revendication 1 ou 2, **caractérisé en ce qu'**il consiste à inclure ledit générateur de ticket dans au moins deux noeuds du système et à ne valider que le générateur de ticket du noeud maître (VALy = 1).

4. Procédé selon la revendication 3, **caractérisé en ce qu'**il consiste à déterminer un noeud suppléant (Ns) pour le remplacement du noeud maître.

5. Procédé selon la revendication 4, **caractérisé en ce qu'**il consiste à modifier dans tous lesdits noeuds ladite adresse (TICK_ID) du générateur de ticket lorsque le générateur maître est remplacé par le noeud suppléant.

6. Procédé selon la revendication 4 ou 5, **caractérisé en ce que** lorsque ledit noeud demandeur d'un ticket ne peut pas accéder au générateur de ticket du noeud maître, il demande le remplacement du noeud maître ou effectue ce remplacement s'il est le noeud suppléant, et il refait la demande d'un ticket pour accéder au nouveau générateur maître.

7. Système informatique multinodal (SYS) comprenant un mécanisme de distribution de ticket (MEC), un ticket identifiant une tâche ou un événement dans le système, **caractérisé en ce que** le mécanisme est réparti dans des noeuds du système en cellules respectives de distribution de ticket (DIS) comprenant, dans un noeud maître, un moyen matériel générateur de ticket et, dans chacun desdits noeuds, un moyen de stockage (REF) de l'adresse (TICK_ID) du générateur de ticket et un moyen de commande (P, CTL) d'accès au moyen de stockage du noeud correspondant et au générateur de ticket du noeud maître.

8. Système selon la revendication 7, **caractérisé en ce que** les cellules d'au moins deux desdits noeuds incluent chacune un moyen matériel générateur de ticket et ledit mécanisme comprend des moyens de validation (CTL, VAL) du générateur de ticket du noeud maître.

9. Système selon la revendication 7 ou 8, **caractérisé en ce que** ledit moyen de commande (CTL) est relié à au moins un processeur (P).

10. Système selon la revendication 7, 8 ou 9, **caractérisé en ce que** ledit moyen de commande comprend en outre un moyen d'écriture dans le moyen de stockage (REF) et/ou dans le générateur de ticket (TICK).

11. Système selon l'une des revendications 7 à 10, **caractérisé en ce que** le générateur de ticket (TICK) inclut un compteur (COMP) et, optionnellement, un registre relié au compteur.

12. Système selon l'une des revendications 7 à 11, **caractérisé en ce que** le moyen de stockage est un registre (REF).

13. Système selon l'une des revendications 7 à 12, **caractérisé en ce que** dans un noeud incorporant un module de communication intemodale (ISL), la cellule (DIS) est incorporée dans ce module.

14. Noeud informatique (Nx) comprenant au moins un processeur (Pxm), une mémoire (Mx) et un bus (SBx), **caractérisé en ce qu'**il comprend une cellule de distribution de ticket (DlSx) pour la mise en oeuvre du procédé défini par l'une des revendications 1 à 6 ou du système (SYS) défini par l'une des revendications 7 à 13.

15. Circuit intégré (lC), **caractérisé en ce qu'**il incorpore un circuit de distribution de ticket (DIS) pour la mise en oeuvre du procédé défini par l'une des revendications 1 à 6 ou du système (SYS) défini par l'une des revendications 7 à 13.

## Patentansprüche

1. Verfahren zum Verteilen eines Tickets, das eine Task oder ein Ereignis in einem Datenverarbeitungssystem (SYS) mit mehreren Knoten identifiziert, **dadurch gekennzeichnet**, claß es darin besteht, unter den Knoten des Systems einen Master-Knoten (Ny) für die Verteilung des Tickets zu bestimmen, in diesem ein Ticketgenerator-Hardwaremittel (TICK) vorzusehen, die Adresse (TICK_ID) des Ticketgenerators in den Knoten zu speichern und dann, wenn einer der Knoten ein Ticket anfordert, die Adresse in dem anfordernden Knoten zu lesen und auf den Ticketgenerator zuzugreifen.

2. Verfahren nach Anspruch 1, **dadurch gekennzeichnet, daß** es darin besteht, jedes Ticket durch ein erstes Feld (SESS), das eine ununterbrochene Zeitperiode der Verteilung des Tickets durch den Ticketgenerator im Master-Knoten repräsentiert, und ein zweites Feld (COUNT), das während dieser Periode die Anzahl der Zugriffe auf den Ticketgenerator zum Zeitpunkt des dieser Ticketanforderung entsprechenden Zugriffs repräsentiert, zu identifizieren.

3. Verfahren nach Anspruch 1 oder 2, **dadurch gekennzeichnet, daß** es darin besteht, den Ticketgenerator in wenigstens zwei Knoten des Systems vorzusehen und nur den Ticketgenerator des Master-Knotens zu validieren (VALy = 1).

4. Verfahren nach Anspruch 3, **dadurch gekennzeichnet, daß** es darin besteht, einen Stellvertreterknoten (ns) für die Ersetzung des Master-Knotens zu bestimmen.

5. Verfahren nach Anspruch 4, **dadurch gekennzeichnet, daß** es darin besteht, in allen Knoten die Adresse (TICK_ID) des Ticketgenerators zu modifizieren, wenn der Master-Generator durch den Stellvertreterknoten ersetzt wird.

6. Verfahren nach Anspruch 4 oder 5, **dadurch gekennzeichnet, daß** der ein Ticket anfordernde Knoten dann, wenn er nicht auf den Ticketgenerator des Master-Knotens zugreifen kann, die Ersetzung des Master-Knotens fordert oder, wenn er der Stellvertreterknoten ist, diese Ersetzung vornimmt und das Ticket erneut anfordert, um erneut auf den Master-Generator zuzugreifen.

7. Datenverarbeitungssystem (SYS) mit mehreren Knoten, das einen Mechanismus (MEC) für die Ticketverteilung umfaßt, wobei ein Ticket eine Task oder ein Ereignis in dem System identifiziert, **dadurch gekennzeichnet, daß** der Mechanismus in den Knoten des Systems auf jeweilige Ticketverteilungszellen (DIS) verteilt ist und in einem Master-Knoten ein Ticketgenerator-Hardwaremittel und in jedem der Knoten ein Speichermittel (REF) für die Adresse (TICK_ID) des Ticketgenerators sowie ein Steuermittel (P, CTL) für den Zugriff auf das Speichermittel des entsprechenden Knotens und auf den Ticketgenerator des Master-Knotens umfaßt.

8. System nach Anspruch 7, **dadurch gekennzeichnet, daß** die Zellen wenigstens zweier Knoten jeweils ein Ticketgenerator-Hardwaremittel enthalten und der Mechanismus Validierungsmittel (CTL, VAL) für den Ticketgenerator des Master-Knotens umfaßt.

9. System nach Anspruch 7 oder 8, **dadurch gekennzeichnet, daß** das Steuermittel (CTL) mit wenigstens einem Prozessor (P) verbunden ist.

10. System nach Anspruch 7, 8 oder 9, **dadurch gekennzeichnet, daß** das Steuermittel außerdem ein Mittel zum Schreiben in das Speichermittel (REF) und/oder in den Ticketgenerator (TICK) umfaßt.

11. System nach einem der Ansprüche 7 bis 10, **dadurch gekennzeichnet, daß** der Ticketgenerator (TICK) einen Zähler (COMP) und optional ein mit dem Zähler verbundenes Register enthält.

12. System nach einem der Ansprüche 7 bis 11, **dadurch gekennzeichnet, daß** das Speichermittel ein Register (REF) ist.

13. System nach einem der Ansprüche 7 bis 12, **dadurch gekennzeichnet, daß** in einem Knoten, der ein Modul (ISL) für die Kommunikation zwischen den Knoten enthält, die Zelle (DIS) in diesem Modul enthalten ist.

14. Datenverarbeitungsknoten (Nx), der wenigstens einen Prozessor (Pxm), einen Speicher (Mx) und einen Bus (SBx) umfaßt, **dadurch gekennzeichnet, daß** er eine Ticketverteilungszelle (DISx) umfaßt, um das durch einen der Ansprüche 1 bis 6 definierte Verfahren auszuführen oder das durch einen der Ansprüche 7 bis 13 definierte System (SYS) zu betreiben.

15. Integrierte Schaltung (IC), **dadurch gekennzeichnet, daß** sie eine Ticketverteilungsschaltung (DIS) enthält, um das durch einen der Ansprüche 1 bis 6 definierte Verfahren auszuführen oder das durch einen der Ansprüche 7 bis 13 definierte System (SYS) zu betreiben.

## Claims

1. Method of distributing a ticket identifying a task or an event in a multinode computer system (SYS), **characterised in that** it consists in determining, among the nodes of the system, a master node (Ny) for the distribution of the ticket, in including therein a ticket-generating hardware means (TICK), in storing the address (TICK_ID) of the ticket generator in said nodes and, when one of said nodes requests a ticket, in reading said address from the requester node and in accessing the ticket generator.

2. Method according to Claim 1, **characterised in that** it consists in identifying each ticket by a first field (SESS) representing a continuous period of time for ticket distribution by the ticket generator in the master node and by a second field (COUNT) representive, during said period, of the number of accesses to said ticket generator at the time of said access corresponding to said ticket request.

3. Method according to Claim 1 or 2, **characterised in that** it consists in including said ticket generator in at least two nodes of the system and in validating only the ticket generator of the master node (VALy = 1).

4. Method according to Claim 3, **characterised in that** it consists in determining a substitute node (Ns) for the replacement of the master node.

5. Method according to Claim 4, **characterised in that** it consists in modifying, in all said nodes, said address (TICK_ID) of the ticket generator when the master generator is replaced by the substitute node.

6. Method according to Claim 4 or 5, **characterised in that** when said ticket-requesting node cannot access the ticket generator of the master node, it asks for the replacement of the master node or performs this replacement if it is the substitute node, and it repeats the request for a ticket in order to access the new master generator.

7. Multinode computer system (SYS) comprising a ticket distribution mechanism (MEC), a ticket identifying a task or an event in the system, **characterised in that** the mechanism is broken down within the nodes of the system into respective ticket distribution cells (DIS) comprising, in a master node, a ticket-generating hardware means and, in each of said nodes, a means (REF) for storing the address (TICK_ID) of the ticket generator and a means (P, CTL) for controlling access to the storage means of the corresponding node and to the ticket generator of the master node.

8. System according to Claim 7, **characterised in that** the cells of at least two of said nodes each include a ticket-generating hardware means and said mechanism comprises validation means (CTL, VAL) for the ticket generator of the master node.

9. System according to Claim 7 or 8, **characterised in that** said control means (CTL) is connected to at least one processor (P).

10. System according to Claim 7, 8 or 9, **characterised in that** said control means also comprises a means for writing in the storage means (REF) and/or in the ticket generator (TICK).

11. System according to one of Claims 7 to 10, **characterised in that** the ticket generator (TICK) includes a counter (COMP) and, optionally, a register connected to the counter.

12. System according to one of Claims 7 to 11, **characterised in that** the storage means is a register (REF).

13. System according to one of Claims 7 to 12, **characterised in that** in a node incorporating an internode communication module (ISL), the cell (DIS) is incorporated into that module.

14. Computer node (Nx) comprising at least one processor (Pxm), a memory (Mx) and a bus (SBx), **characterised in that** it comprises a ticket distribution cell (DISx) for implementing the method defined by one of Claims 1 to 6 or the system (SYS) defined by one of Claims 7 to 13.

15. Integrated circuit (IC), **characterised in that** it incorporates a ticket distribution circuit (DIS) for implementing the method defined by one of Claims 1 to 6 or the system (SYS) defined by one of Claims 7 to 13.
